# EUROPEAN PATENT APPLICATION

(11) **EP 4 815 161 A1**
(43) Date of publication of application: **30.09.2026**
(21) Application number: 24894277.3
(22) Date of filing: 21.06.2024
(51) Int. Cl.: H01M 50/358, H01M 50/342, H01M 10/6554, H01M 50/204

(54) **BATTERY MODULE AND BATTERY PACK INCLUDING SAME**

(30) Priority: 21.11.2023 KR 20230162337
(71) Applicant: SK On Co., Ltd., Seoul 03161 (KR)
(72) Inventor: JEONG, Ha Chul, Daejeon 34124 (KR); CHOI, Eun Jeong, Daejeon 34124 (KR); LEE, Gwang Taeck, Daejeon 34124 (KR)
(74) Representative: Stolmár & Partner Patentanwälte PartG mbB
(86) International application number: PCT/KR2024/008623
(87) International publication number: WO 2025/110380

(57) **Abstract**

A battery module according to the present disclosure includes: a plurality of battery cells each including a main body portion having the electrode assembly therein, a venting portion formed openable on one surface of the main body portion, and a tab portion connected to the electrode assembly and protruding outward from the main body portion in a predetermined protruding direction, and a support housing including a contact portion in contact with at least one of the plurality of battery cells, a through hole formed through the contact portion, and a recessed portion recessed in a direction away from the plurality of battery cells on both sides of the contact portion, the support housing supporting the plurality of battery cells.

## Description

### [Field of the Invention]

The present disclosure relates to a battery module and a battery pack including the same, and more particularly, to a battery module including a flow path and a battery pack including the same.

### [Background Art]

A secondary battery converts electrical energy into chemical energy for storage and can be used multiple times through charging and discharging. Due to economical and eco-friendly characteristics, secondary batteries are used diversely and extensively across all industries. Among secondary batteries, lithium secondary batteries are widely utilized across industries, including portable devices requiring high energy density.

The operating principle of lithium secondary batteries is based on electrochemical oxidation-reduction reactions. That is, electricity is generated by the movement of lithium ions, and charging occurs through a reverse process thereof. In lithium secondary batteries, a phenomenon where lithium ions leave an anode and migrate to a cathode through an electrolyte and a separator is referred to as discharge, and a reverse process of this phenomenon is referred to as charge.

When secondary batteries are used a plurality of times, gas may be generated internally. This generated gas needs to be vented outside the secondary batteries. In addition, when a plurality of secondary batteries are grouped together to form a battery module or a battery pack, it is necessary for gas to be rapidly vented from inside the battery module or the battery pack.

### [Disclosure of the Invention]

### [Problems to be Solved by the Invention]

An object of the present disclosure is to rapidly and efficiently discharge gas by guiding a venting direction of the gas.

Another object of the present disclosure is to provide a battery module and a battery pack with enhanced stability and high energy density by applying pressure to a plurality of battery cells.

In addition, the present disclosure can be widely applied in green technology fields such as electric vehicles, battery charging stations, and solar and wind power generation utilizing batteries.

In addition, the present disclosure can be used in eco-friendly electric vehicles, hybrid vehicles, etc., to prevent climate changes by suppressing air pollution and greenhouse gas emissions.

### [Means for Solving the Problems]

In accordance with an aspect of the present disclosure, there is provided a battery module, including: a plurality of battery cells each including a main body portion having the electrode assembly therein, a venting portion formed openable on one surface of the main body portion, and a tab portion connected to the electrode assembly and protruding outward from the main body portion in a predetermined protruding direction, and a support housing including a contact portion in contact with at least one of the plurality of battery cells, a through hole formed through the contact portion, and a recessed portion recessed in a direction away from the plurality of battery cells on both sides of the contact portion, the support housing supporting the plurality of battery cells.

The battery module may further include a flow path formed in the contact portion and the recessed portion, wherein the flow path communicates with the main body portion through the through hole when the venting portion is open.

The plurality of battery cells may be stacked in one direction such that main body portions of two adjacent battery cells among the plurality of battery cells face each other, and the venting portion and the tab portion may be located on different surfaces perpendicular to a stacking direction of the plurality of battery cells among surfaces of the plurality of battery cells.

The through hole may be formed at a position corresponding to the venting portion.

The venting portion may be openable based on an internal pressure of the main body portion.

The contact portion and the recessed portion may extend in the predetermined protruding direction.

The support housing may be a corrugated plate.

The recessed portion may be arranged on an outermost side of the support housing in a direction in which the battery cells are stacked.

The support housing may include a plurality of contact portions and a plurality of recessed portions, and a contact portion assembly in which the plurality of contact portions are grouped into one or more predetermined numbers is alternately arranged in a stacking direction of the battery cells with a recessed portion assembly in which the plurality of recesses are grouped into one or more predetermined numbers.

A cross-section of the flow path cut in a direction perpendicular to the predetermined protruding direction may be polygonal.

The battery module may further include: reinforcing portions arranged on both sides of the plurality of battery cells in a direction in which the plurality of battery cells are stacked, and a bending portion surrounding the plurality of battery cells and connecting the reinforcing portions to each other.

The bending portion may cover one surface on which the tab portion of each of the plurality of battery cells protrudes.

The reinforcing portions may be coupled to the bending portion at a vertex region.

The reinforcing portions and the bending portion may be connected by screw fastening.

The support housing may be connected to the reinforcing portions.

The support housing may include a stainless steel material.

The battery module may further include a heat conduction portion covering upper surfaces of the plurality of battery cells and transferring heat to an outside.

In accordance with an aspect of the present disclosure, there is provided a battery pack including the battery module of claim 1, and a pack case accommodating the battery module therein.

### [Effects of the Invention]

In accordance with the present disclosure, gas can be discharged rapidly and efficiently by guiding a venting direction of the gas.

In addition, a battery module and a battery pack with enhanced stability and high energy density by applying pressure to a plurality of battery cells may be provided.

### [Brief Description of the Drawings]

FIG. 1 illustrates a battery cell according to an embodiment of the present disclosure.
FIG. 2 shows a disassembled view of a battery module according to an embodiment of the present disclosure.
FIGS. 3 and 4 show a battery module according to an embodiment of the present disclosure.
FIG. 5 illustrates a support housing according to an embodiment of the present disclosure.
FIG. 6 shows a cross-sectional view of a battery module according to an embodiment of the present disclosure.
FIG. 7 shows a support housing according to another embodiment of the present disclosure.
FIG. 8 shows a cross-sectional view of a battery module according to another embodiment of the present disclosure.
FIGS. 9 and 10 show a support housing according to another embodiment of the present disclosure.
FIG. 11 illustrates a battery pack according to an embodiment of the present disclosure.

### [Detailed Description for Carrying out the Invention]

The present disclosure will now be described in detail with reference to the accompanying drawings. However, this is merely illustrative, and the present disclosure is not limited to the specific embodiments described herein.

The specific terms used herein are intended solely for the convenience of description and are not intended to limit the scope of the exemplary embodiments described.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "parallel," "perpendicularly," "at the center," "concentric," or "coaxial," not only strictly represent the arrangement, but also represent the state of relative displacement with a tolerance, or an angle or distance at which the same function is obtained.

To explain the present disclosure, descriptions below may be based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for the purpose of explanation, so that the present disclosure may be clearly understood. The directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an embodiment that includes only a second component without a first component may also be implemented.

Unless the context clearly indicates otherwise, singular expressions used in this specification include plural expressions.

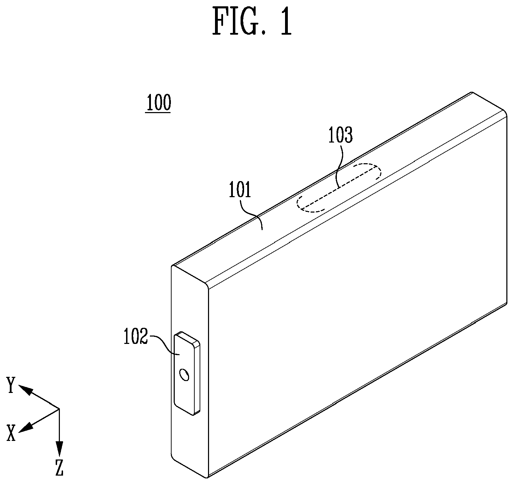

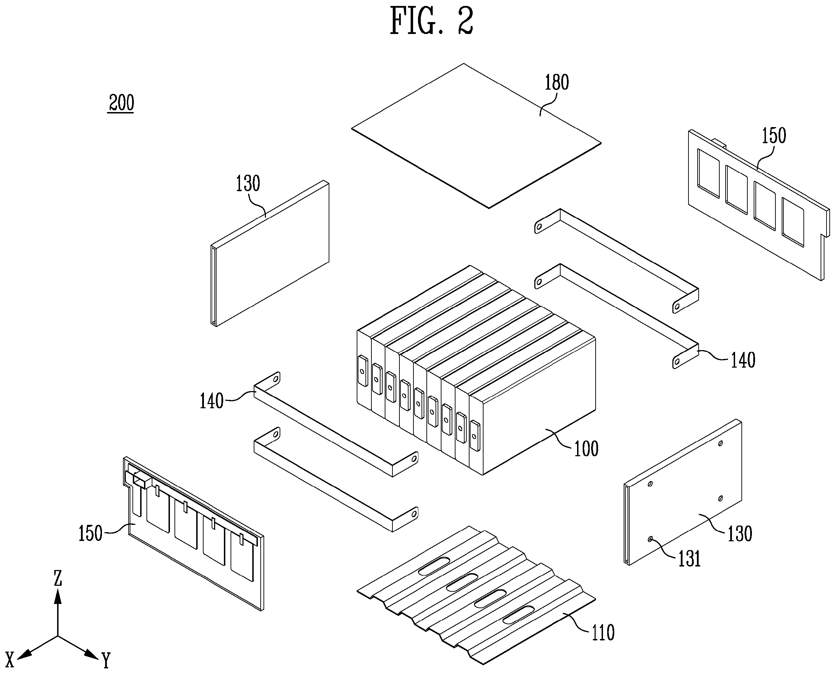

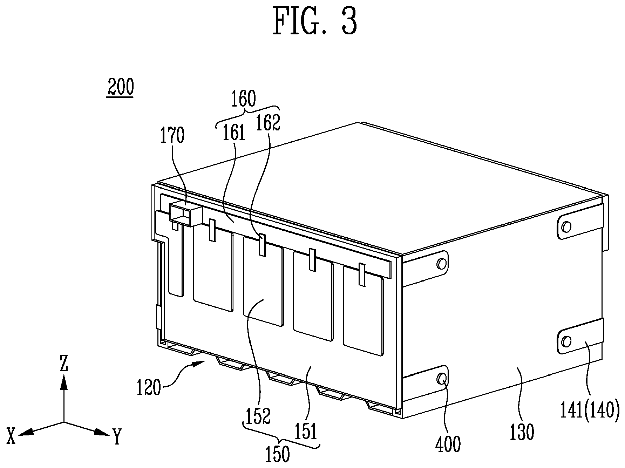

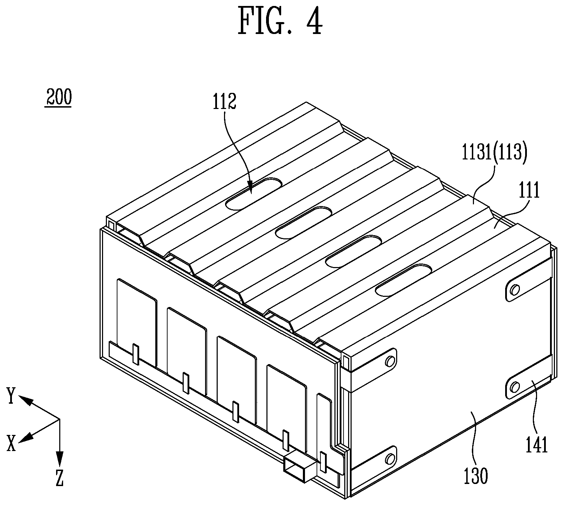

FIG. 1 illustrates a battery cell 100 according to an embodiment of the present disclosure. FIG. 2 shows a disassembled view of a battery module 200 according to an embodiment of the present disclosure. FIGS. 3 and 4 illustrate the battery module 200 according to an embodiment of the present disclosure.

The battery cell 100 described herein refers to a rechargeable secondary battery capable of repeated charging and discharging of electrical energy. For example, the battery cell 100 may refer to a lithium secondary battery or a lithium-ion battery, but is not limited thereto. In another example, the battery cell 100 may refer to a solid-state battery.

The battery cell 100 may be classified as a pouch-type secondary battery, a prismatic secondary battery, or a cylindrical secondary battery based on the shape thereof. For the sake of convenience in this specification, a prismatic secondary battery is shown as an example, but the battery cell 100 is not limited thereto

Meanwhile, the battery module 200 described herein refers to a battery assembly where one or more battery cells 100 are grouped together and enclosed in a case to protect the battery cells from external impacts, heat, vibration, etc., and to achieve high-power and high-capacity characteristics.

Meanwhile, the battery pack 300 described herein refers to a battery assembly formed by grouping one or more battery cells 100 or battery modules 200.

Referring to FIGS. 1 to 4, the battery module 200 of the present disclosure includes the plurality of battery cells 100 each including a main body portion 101 including an electrode assembly (not shown) that generates or stores electrical energy, a venting portion 103 formed openably on a surface of the main body portion 101, and a tab portion 102 connected to the electrode assembly and protruding outward from the main body portion 101 along a predetermined protruding direction, and a support housing 110 including a contact portion 111 contacting at least one of the plurality of battery cells 100, a through hole 112 formed by penetrating the contact portion 111, and recessed portions 113 formed on both sides of the contact portion 111 and recessed in a direction away from the plurality of battery cells 100, and supporting the plurality of battery cells 100.

In an embodiment, the venting portion 103 may include a flow path 120 that communicates with the main body portion 101 through the through hole 112 when the venting portion 103 is open, and may be formed in the contact portion 111 and the recessed portion 113.

The plurality of battery cells 100 may be stacked along one direction. For example, referring to FIGS. 2 to 4, the battery cells 100 may be stacked along the Y-direction. This allows the maximum number of battery cells 100 to be included in a given volume of the battery module 200, thereby improving the energy density of the battery module 200.

Each of the plurality of battery cells 100 may include the main body portion 101 for storing and supplying electrical energy, the venting portion 103 formed openably on one surface of the main body portion 101, and the tab portion 102 connected to the electrode assembly and protruding outward from the main body portion 101 along the predetermined protruding direction.

The main body portion 101 may include a cathode and an anode. The cathode may include a cathode active material into which lithium ions may be inserted or extracted. The anode may include an anode active material into which lithium ions may be inserted or extracted. The battery cell 100 may further include a separator to prevent an electrical short circuit between the cathode and the anode and to allow ion flow.

In one embodiment, the cathode, the anode, and the separator may be stacked to form the electrode assembly. The electrode assembly may be classified as a stacking, winding, stack-folding, or Z-stacking type electrode assembly depending on a method by which the cathode, the anode, and the separator are stacked. The battery cell 100 of the present disclosure is not limited to one stacking method and may include an electrode assembly stacked in various ways.

The cathode and the anode may each include a current collector. The cathode may include a cathode current collector and the anode may include an anode current collector. The current collector may include a known conductive material where no chemical reactions are caused in the lithium secondary battery. For example, the current collector may include any one of stainless steel, nickel (Ni), aluminum (Al), titanium (Ti), copper (Cu), and alloys thereof, and may be provided in various forms such as a film, a sheet, or foil.

The cathode and the anode may include active materials. The cathode may include a cathode active material, and the anode may include an anode active material. The cathode active material and the anode active material may each be a material into which lithium ions may be inserted and from which the lithium ions may be extracted. For example, the cathode active material may be a lithium metal oxide, and the anode active material may be any one of a carbon-based material such as crystalline carbon, amorphous carbon, carbon composite, carbon fiber, a lithium alloy, silicon (Si), or tin (Sn).

In addition, the cathode and the anode may each further include a binder and a conductive material to enhance mechanical stability and electrical conductivity.

The separator may be configured to prevent electrical short circuits between the cathode and the anode and to allow ion flow. The type of separator is not specifically limited but may include a porous polymer film. For example, the separator may include a porous polymer film or a porous nonwoven fabric.

An electrolyte may include an electrolyte solution. The electrolyte solution may be a nonaqueous electrolyte solution. The electrolyte solution may include a lithium salt and an organic solvent. The electrolyte solution may further include additives. The additives may form a layer on the cathode or anode through chemical reactions in the battery. For example, the additives may form a cathode interfacial layer on the cathode and an anode interfacial layer on the anode.

The tab portion 102 may be connected to the electrode assembly and protrude outward from the main body portion 101 along the predetermined protruding direction. The tab portion 102 may electrically connect the main body portion 101 to the exterior. The tab portion 102 may include a cathode tab 102 connected to the cathode and an anode tab 102 connected to the anode.

The cathode tab 102 and the anode tab 102 may be provided on opposite sides of the main body portion 101. Referring to FIG. 1, the cathode tab 102 may be provided on one surface of the main body portion 101, and the anode tab 102 may be provided on the opposite surface.

The battery cell 100 may include the venting portion 103 formed on one surface of the main body portion 101 to be openable. The venting portion 103 may discharge gas generated in the main body portion 101 to the outside. The venting portion 103 may be formed in a region of the main body portion 101, and the venting portion 103 may allow the interior and exterior of the main body portion 101 to communicate with each other. In other words, gas may be discharged to the exterior of the main body portion 101 to the venting portion 103.

When gas is not discharged from the battery cell 100 and remains in the battery cell 100, the internal pressure of the battery cell 100 increases, which may lead to an explosion or fire of the battery cell 100. Therefore, the venting portion 103 may be formed on one surface of the battery cell 100 to efficiently discharge the gas.

In one embodiment, the venting portion 103 may open when the internal pressure of the main body portion 101 increases. In other words, the venting portion 103 may be closed immediately after manufacturing. The main body portion 101 may be charged, discharged, and used repeatedly. During this process, gases generated may cause the internal pressure of the main body portion 101 to increase. When the internal pressure reaches a critical point that the venting portion 103 cannot withstand, the venting portion 103 may open to allow gas to escape. Ultimately, the venting portion 103 may be capable of opening based on the internal pressure of the main body portion 101.

The venting portion 103 may be formed with relatively lower rigidity compared to adjacent regions to cause the venting portion 103 to open. For example, the thickness of the venting portion 103 may be less than that of adjacent regions, or the material of the venting portion 103 and that of the adjacent regions may differ. Alternatively, a groove may be formed in the venting portion 103. The groove enables the venting portion 103 to open more readily than the adjacent regions in response to pressure. The venting portion 103 is not limited to the above-described embodiments and may be formed by known methods or have known configurations.

Meanwhile, the plurality of battery cells 100 are stacked in one manner such that the main body portions 101 of two adjacent battery cells 100 among the plurality of battery cells 100 may face each other, and the venting portion 103 and the tab portion 102 may be located on different surfaces, respectively, being perpendicular to a stacking direction of the plurality of battery cells 100 among surfaces of the plurality of battery cells 100.

The venting portion 103 and the tab portion 102 may be located on different surfaces of the main body portion 101. In one embodiment, the surface on which the venting portion 103 is formed and the surface on which the tab portion 102 is formed may be perpendicular to each other. Preferably, as shown in FIGS. 2 to 4, the venting portion 103 included in each of the plurality of battery cells 100 may be formed to face downward.

Consequently, when the plurality of battery cells 100 are stacked, the tab portion 102 formed on the plurality of battery cells 100 may face the +X direction and the -X direction, while the venting portion 103 may face the -Z direction.

The battery module 200 of the present disclosure may further include a busbar assembly 150. The busbar assembly 150 may electrically connect the plurality of battery cells 100. The plurality of battery cells 100 may be connected in series and/or parallel with each other. To this end, the busbar assembly 150 may contact the tab portion 102 of each of the plurality of battery cells 100.

The busbar assembly 150 may further include a busbar 152 for electrically connecting the plurality of battery cells 100 and a busbar plate 151 connected to and supporting the busbar 152. The busbar plate 151 may extend along the direction in which the plurality of battery cells 100 are stacked. The busbar plate 151 may include an insulating material.

The busbar 152 may be coupled to the busbar plate 151. The busbar 152 may be provided as a plurality of busbars 152. The plurality of busbars 152 may each be connected to a battery assembly that bundles a predetermined number of battery cells 100. This allows the plurality of battery cells 100 to be electrically connected in series and/or parallel.

In addition, the plurality of busbars 152 may be spaced apart at a predetermined interval to avoid mutual contact and may each be coupled to the busbar plate 151. Ultimately, referring to FIG. 1, the busbar plate 151 extends along the Y-direction, and the plurality of busbars 152 may each be coupled to the busbar plate 151 along the Y-direction.

One surface of the busbar plate 151 may face the plurality of battery cells 100, and the plurality of busbars 152 may be coupled to the opposite surface.

The battery module 200 of the present disclosure may further include a sensing unit 160. The sensing unit 160 may acquire information of at least one battery cell 100 among the plurality of battery cells 100. The information of the battery cell 100 may refer to electrical information of the battery cell 100. For example, the information of the battery cell 100 may refer to the voltage, current, and state of charge of the battery cell 100.

The battery module 200 of the present disclosure may further include a control unit (not shown). The control unit may control the battery cell 100 based on the information of the battery cell 100. The control unit may control the battery cell 100 to maximize the performance of the battery module 200 and use the battery module 200 efficiently. For example, the control unit may control the charging and discharging of the battery cell 100 or adjust the voltage difference between battery cells 100 through cell balancing.

In one embodiment, the control unit may control the battery module 200 based on information acquired from the sensing unit 160. The control unit may be a Battery Management System (BMS).

Meanwhile, the sensing unit 160 may be electrically connected to the busbar assembly 150 to acquire information about the battery cells 100. In an embodiment, the sensing unit 160 may be connected to the plurality of battery cells 100 respectively.

Referring to FIGS. 3 and 4, in one embodiment, the sensing unit 160 may include a sensing board 161 and a sensor 162. The sensing board 161 may extend along a direction in which the busbar plate 151 extends, and may be positioned on top of the busbar plate 151. The sensing board 161 may be a flexible plastic circuit board.

The sensor 162 may be provided as a plurality of sensors 162. The plurality of sensors 162 may connect the sensing board 161 to the plurality of busbars 152.

In another embodiment, the sensing unit 160 may be positioned only on one side of the battery module 200. The sensing unit 160 may be positioned on only one of the two surfaces where two tab portions of the battery cell 100 are located, rather than on both surfaces. To this end, the sensing unit 160 may measure a voltage of the tab portion 102 of one battery cell 100 and a voltage of an exterior member which accommodates the main body portion 101 of the battery cell 100, respectively.

Meanwhile, the sensing unit 160 may further include a connector 170. The connector 170 may communicate information acquired by the sensing unit 160 to the outside. The connector 170 may employ known techniques used for transmitting and receiving information. However, the present disclosure is not limited thereto, and the connector 170 may be provided separately from the sensing unit 160.

The battery module 200 of the present disclosure further includes the support housing 110. The support housing 110 may support the plurality of battery cells 100. To this end, the support housing 110 may be positioned below the plurality of battery cells 100. Referring to FIGS. 2 to 4, the support housing 110 may be positioned below the plurality of battery cells 100 along the Z-direction.

In one embodiment, the battery module 200 may include a module housing. The module housing may accommodate the plurality of battery cells 100 therein. The module housing may protect the plurality of battery cells 100 from external impacts, pressure, vibration, or heat. The module housing may group the plurality of battery cells 100 to form a single unit.

The support housing 110 may be a component of the module housing. In other words, the support housing 110 may be connected to other components to form a receptacle space accommodating the plurality of battery cells 100. In this manner, the support housing 110 may protect the plurality of battery cells 100. Referring to FIG. 2, the support housing 110 may particularly protect bottom surfaces of the plurality of battery cells 100.

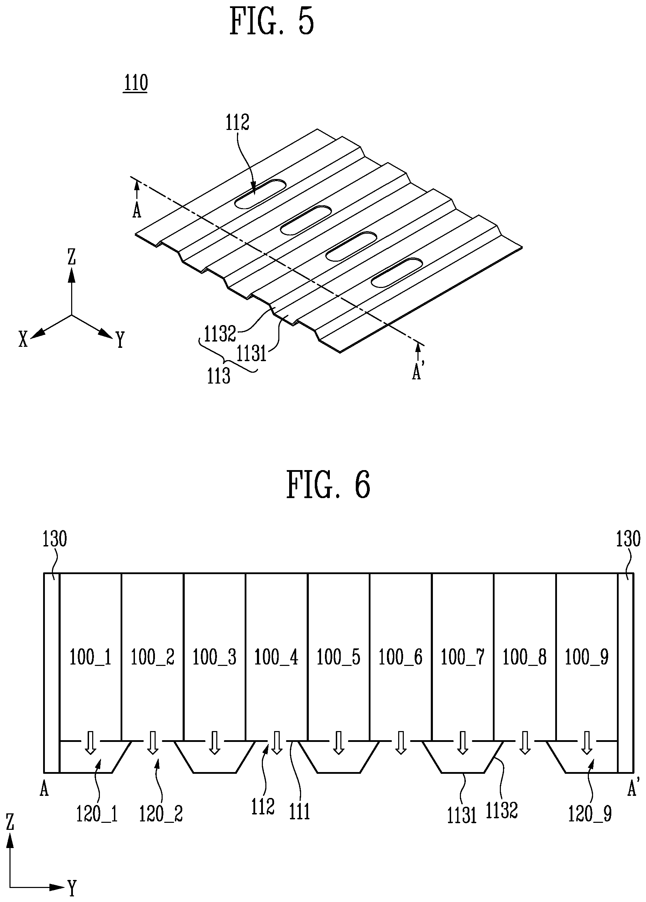

The support housing 110 may use a material with fire resistance, heat resistance, and high mechanical rigidity. The support housing 110 may include a stainless steel material. For example, the support housing 110 may be manufactured using SUS304 material. The support housing 110 will be described in detail with reference to FIGS. 5 to 10.

The battery module 200 may further include a reinforcing portion 130 and a bending portion 140. The reinforcing portion 130 may be arranged on both sides of the plurality of battery cells 100 along the direction in which the plurality of battery cells 100 are stacked. For example, referring to FIGS. 2 to 4, a pair of reinforcing portions 130 may be arranged on outer sides of the plurality of battery cells 100, respectively.

The reinforcing portions 130 may be a component of the module housing. In one embodiment, the support housing 110 may be connected to the reinforcing portions 130 . The support housing 110 and the reinforcing portions 130 may be connected to form an internal accommodating space. The support housing 110 and the reinforcing portion 130 may form one side of the accommodating space.

The reinforcing portions 130 may be manufactured from a material with high mechanical rigidity. The reinforcing portions 130 may be formed into a flat plate shape to uniformly apply pressure to the plurality of battery cells 100.

The bending portion 140 may surround the plurality of battery cells 100 and connect the reinforcing portions 130 arranged on both sides of the plurality of battery cells 100 to each other. The bending portion 140 may connect the reinforcing portions 130 to each other so that the plurality of battery cells 100 may be pressed toward the center. To this end, the bending portion 140 may extend along a direction in which the plurality of battery cells 100 are stacked.

The bending portion 140 may cover one surface where the tab portions 102 of the plurality of battery cells 100 protrude. The bending portion 140 may be positioned on both sides where the tab portions 102 protrude. The bending portion 140 may be provided as a plurality of bending portions 140. This may enhance the energy density of the battery module 200. In addition, the upper surface of the battery module 200 may be provided flat.

In an embodiment, the bending portion 140 may include a bending body 141 and fixing holes (not shown). Both ends of the bending body 141 may be bent. The bent ends may efficiently apply pressure to the plurality of battery cells 100. The fixing holes may be provided at both ends of the bending body 141.

Referring to FIGS. 2 to 4, one end of the bending portion 140 may be connected to one of the reinforcing portions 130 arranged on both sides, and the other end of the bending portion 140 may be connected to the other reinforcing portion 130. The bending body 141 may extend along the Y-direction and may surround the plurality of battery cells 100.

One end of the bending portion 140 and the other end of the bending portion 140 may be positioned outwardly relative to the reinforcing portion 130 along the stacking direction of the plurality of battery cells 100. In other words, the bending portion 140 may pressurize the reinforcing portion 130 from the outer side of the reinforcing portion 130.

The reinforcing portion 130 may be coupled to the bending portion 140 at the vertex region. The vertex region of the reinforcing portion 130 refers to the region where two edges of the reinforcing portion 130 meet. In an embodiment, two bending portions 140 may be arranged on each side of the plurality of battery cells 100. The total of four bending portions 140 may be connected to the reinforcing portions 130 at the vertex region of the reinforcing portion 130.

In an embodiment, the reinforcing portion 130 and the bending portion 140 may be connected by screw fastening. To this end, the reinforcing portion 130 may include an insertion hole 131 formed by being penetrated as shown in FIG. 2. The bending portion 140 may include the fixing hole formed by penetrating a portion of the bending body 141. When the reinforcing portion 130 and the bending portion 140 are connected, the insertion hole 131 and the fixing hole may be formed in corresponding positions.

For example, referring to FIGS. 2 to 4, the insertion hole 131 and the fixing hole may be formed at corresponding positions along the Y-direction. The reinforcing portion 130 and the bending portion 140 may be coupled by a coupling means 400. For example, the coupling means 400 may be bolts and nuts.

However, the present disclosure is not limited thereto, and the reinforcing portion 130 and the bending portion 140 may be connected by any known technique which allows the reinforcing portion 130 and the bending portion 140 to be stably connected to each other. For example, a fastening groove may be formed in the reinforcing portion 130, and the bending portion 140 may be fastened into the fastening groove to connect the reinforcing portion 130 and the bending portion 140, or the reinforcing portion 130 and the bending portion 140 may be connected by a snap-fit connection.

FIG. 5 illustrates the support housing 110 according to an embodiment of the present disclosure, and FIG. 6 illustrates a cross-section of the battery module 200 according to an embodiment of the present disclosure.

The battery module 200 according to an embodiment of the present disclosure may have the venting portion 103 located at the bottom along the Z-direction. Gas may be discharged downward through the venting portion 103. Gas emitted from any one battery cell 100 may affect adjacent other battery cells 100. For example, the pressure of the gas may cause the closed venting portion 103 to open.

Therefore, it is necessary to minimize the influence of gas discharged from any one battery cell 100 on adjacent battery cells 100. The battery module 200 of the present disclosure may guide gas to be discharged along a predetermined path.

To this end, the support housing 110 includes the contact portion 111 that contacts at least one of the plurality of battery cells 100, the through hole 112 formed by penetrating the contact portion 111, and the recessed portion 113 formed on both sides of the contact portion 111 and recessed in a direction away from the plurality of battery cells 100. When the venting portion 103 is open, the venting portion 103 may communicate with the main body portion 101 via the through hole 112, and gas may move through the flow path 120 formed in the contact portion 111 and the recessed portion 113.

Referring to FIGS. 5 and 6, the contact portion 111 may contact one surface of the main body portion 101 facing the -Z direction. The contact portion 111 may contact one surface of the main body portion 101 facing downward along the Z direction. Preferably, the contact portion 111 may contact one surface of the main body portion 101 where the venting portion 103 is formed. This allows the contact portion 111 to support the battery cell 100.

The contact portion 111 may extend along the predetermined protruding direction. Referring to FIG. 5, the predetermined protruding direction is the X-direction, and the contact portion 111 may extend along the X-direction. This allows the contact portion 111 to extend along the direction in which the battery cell 100 extends, increasing the contact area with the battery cell 100 and enabling stable support of the battery cell 100.

In addition, the contact portion 111 may be provided as a plurality of contact portions 111. The contact portion 111 may be arranged along the direction in which the battery cells 100 are stacked. Ultimately, the plurality of contact portions 111 extending along the predetermined protruding direction may be arranged at the predetermined interval along the direction in which the battery cells 100 are stacked.

The through hole 112 may be formed at a position corresponding to the venting portion 103. Referring to FIG. 6, the battery cell 100 may be arranged on the upper part of the support housing 110, and the venting portion 103 and the through hole 112 may correspond along the Z-direction. This allows gas from the main body portion 101 to be discharged through the venting portion 103 and then move through the through hole 112 into the flow path 120.

The recessed portion 113 may be indented in a direction away from the battery cell 100 on both sides of the contact portion 111. The direction away from the battery cell 100 may be perpendicular to both the stacking direction of the battery cells 100 and the predetermined protruding direction. Referring to FIG. 5, the direction away from the battery cell 100 refers to the -Z direction. The recessed portion 113 may be indented to form a space through which gas moves.

The recessed portion 113 may include a support portion 1131 and an inclined portion 1132. The support portion 1131 may contact an external component of the support housing 110 to support the support housing 110. The support portion 1131 may be provided as a flat plate. The support portion 1131 may extend along the predetermined protruding direction. The support portion 1131 may extend along the X-direction.

The support portion 1131 may be formed parallel to the contact member 111. This enables the support housing 110 to stably support the battery cell 100. The support portion 1131 may be provided as a plurality of support portions 1131. The plurality of support portions 1131 may be arranged at a predetermined interval along the direction in which the plurality of battery cells 100 are stacked.

The inclined portion 1132 may connect the support portion 1131 and the contact portion 111. The inclined portion 1132 may extend along a predetermined protruding direction. The inclined portion 1132 may be provided as a plurality of inclined portions 1132. The plurality of inclined portions 1132 may be arranged at predetermined intervals along the direction in which the plurality of battery cells 100 are stacked.

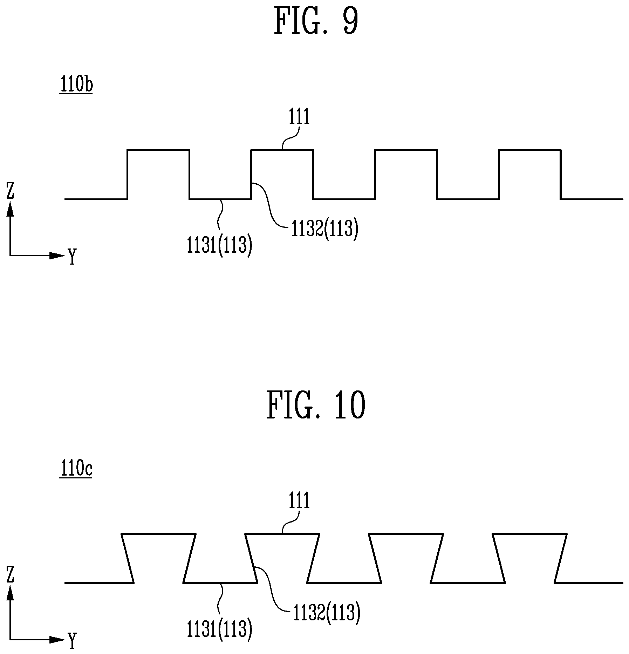

The support portion 1131 and the inclined portion 1132 may form an acute angle, a right angle, or an obtuse angle. The shape of the support portion 1131 and the inclined portion 1132 is described in detail with reference to FIGS. 9 and 10.

Ultimately, the support housing 110 includes the plurality of contact portions 111 and a plurality of recessed portions 113. A contact portion assembly 1110 in which the contact portions 111 are grouped into one or more predetermined numbers may be alternately arranged with a recessed portion assembly in which the recessed portions 113 are grouped into one or more predetermined numbers along the stacking direction of the battery cells 100.

The contact portion assembly 1110 may include one contact portion 111 or may include two or more contact portions 111. Similarly, the recessed portion assembly may include one recessed portion 113 or may include two or more recessed portions 113.

In an embodiment, the support housing 110 may be a corrugated plate.

The contact portion 111, the support portion 1131, and the inclined portion 1132 are described as separate components herein. However, the contact portion 111, the support portion 1131, and the inclined portion 1132 are not limited thereto and may be manufactured as a single body. For example, the support housing 110 may be manufactured by repeatedly bending a flat plate or may be manufactured via injection molding.

The support housing 110 according to one embodiment of the present disclosure may have the recessed portions 113 and the contact portions 111 alternately arranged. Referring to FIG. 6, the recessed portions 113 and the contact portions 111 may be alternately arranged from left to right.

The flow path 120 may be formed in the contact portion 111 and the recessed portion 113. The flow path 120 may be formed on one surface of the support housing 110 facing the battery cell 100 and on the opposite surface. In other words, the flow path 120 may be alternately formed on one surface and the other surface of the support housing 110, thereby minimizing the influence of gas discharged from any one battery cell 100 on an adjacent battery cell 100.

Referring to FIG. 6, a first battery cell 100_1 to a ninth battery cell 100_9 may be stacked along the Y-direction. The support housing 110 may form a first flow path 120_1 to a ninth flow path 120_9 in the contact portion 111 and the recessed portion 113. The first flow path 120_1 may be formed on one surface of the support housing 110 facing the battery cell 100, and the second flow path 120_2 may be formed on the opposite surface of the support housing. In this manner, adjacent flow paths 120 may be formed on different surfaces of the support housing 110 and arranged sequentially.

Gas emitted from the first battery cell 100_1 may travel through the first flow path 120_1, and gas emitted from the second battery cell 100_2 may travel through the second flow path 120_2.

The first flow path 120_1 may be formed in the recessed portion 113. Specifically, the first flow path 120_1 may be formed by the support portion 1131 and the inclined portion 1132. The first flow path 120_1 and the ninth flow path 120_9 are located at the outermost positions, allowing the reinforcing portion 130 to form one side surface of the flow path 120.

The second flow path 120_2 may be formed on the contact portion 111. Specifically, the second flow path 120_2 may be formed by the contact portion 111 and the inclined portion 1132.

The length of the support portion 1131 along the direction in which the battery cells 100 are stacked may be the same as the length of the contact portion 111, whereby the plurality of flow paths 120 may correspond to the plurality of battery cells 100.

The recessed portion 113 may be positioned at the outermost edge of the support housing 110 along the direction in which the battery cells 100 are stacked. Positioning the recessed portion 113 at the outermost edge enhances the structural stability of the battery module 200. Specifically, the support portion 1131 may be positioned below the battery cell 100 at the outermost position. The support portion 1131 may be connected to the reinforcing portion 130. The connection method is not particularly limited and may be connected by any known method.

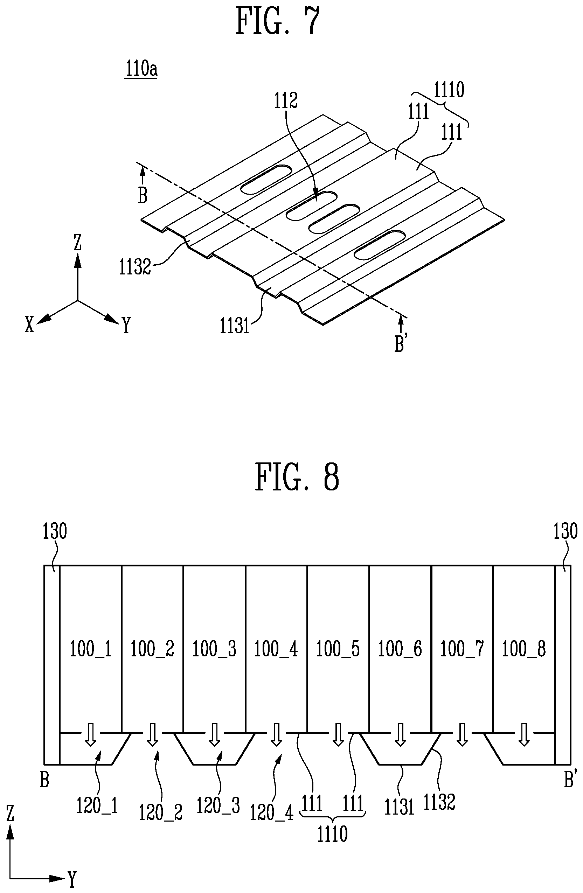

FIG. 7 illustrates the support housing 110 according to another embodiment of the present disclosure, and FIG. 8 illustrates a cross-section of the battery module 200 according to another embodiment of the present disclosure.

Referring to FIG. 7, the contact portions 111 may be arranged continuously to form the contact portion assembly 1110. Referring to FIG. 8, the battery cells may be sequentially arranged from the first battery cell 100_1 to an eighth battery cell 100_8 in a direction from left to right. The recessed portion 113 may be arranged at the outermost position, and as moving inward, the recessed portions 113 and the contact portions 111 may be alternately arranged.

In one embodiment, the recessed portion 113 and the contact portion 111 correspond to a single battery cell 100 and may be alternately arranged. When an even number of battery cells 100 are provided, two contact portions 111 may meet at the point where the same number of battery cells 100 are located on both sides. The two contact portions 111 may form the contact portion assembly 1110. Therefore, gas discharged from the respective venting portions 103 of the two centrally located battery cells 100_4 and 100_5 may travel through a single flow path 120_4.

In this specification, only the contact portion assembly 1110 where the two contact portions 111 connect is shown. However, two or more recessed portions 113 may be connected to each other to form the recessed portion assembly. Gas discharged from the plurality of battery cells 100 facing each other through the recessed portions 113 connected to each other may flow through the flow path 120 formed by the recessed portion assembly.

FIGS. 9 and 10 illustrate support housings 110b and 110c according to other embodiments of the present disclosure. A cross-section obtained by cutting the flow path 120 along a direction perpendicular to the predetermined protruding direction may be polygonal. The cross-section refers to a surface enclosed by the recessed portion 113 and the contact portion 111, along with an imaginary line extending the contact portion 111 or the support portion 1131 in the direction where the plurality of battery cells 100 extend.

Although the flow path 120 is formed by the support housing 110, the flow path 120 is not closed but has one side open; thus, the cross-section includes the imaginary line extending the support portion 1131 or the contact portion 111 in one direction.

Referring to FIG. 9, the support portion 1131 and the inclined portion 1132 may be formed perpendicular to each other. The contact portion 111 and the inclined portion 1132 may have the same length along the Y-direction. The length of the contact portion 111 along the Y-direction may be the same as the length of the battery cell 100. This allows one battery cell 100 to be positioned in the contact portion 111 and the recessed portion 113.

Referring to FIG. 10, the support portion 1131 and the inclined portion 1132 may form an acute angle. The lengths of the contact portion 111 and the inclined portion 1132 along the Y-direction may be the same. The length of the contact portion 111 along the Y-direction may be greater than the length of the battery cell 100.

Meanwhile, the battery module 200 of the present disclosure may further include a heat conduction portion 180 that covers the upper surfaces of the plurality of battery cells 100 and transfers heat to the outside. Referring again to FIGS. 2 to 4, the heat conduction portion 180 may cover the upper surfaces of the plurality of battery cells 100 along the Z-direction.

The heat conduction portion 180 may include a material with high thermal conductivity. The heat conduction portion 180 may efficiently transfer heat generated from the plurality of battery cells 100 to the outside. In an embodiment, the heat conduction portion 180 is connected to a cooling plate (not shown) for cooling, and the temperature of the plurality of battery cells 100 may be controlled by the cooling plate.

The heat conduction portion 180 may be coated onto the upper surfaces of the plurality of battery cells 100 or provided in a plate shape to be placed on the upper surfaces of the plurality of battery cells 100. Without being limited to these methods, known techniques capable of efficiently transferring heat to regulate the temperature of the plurality of battery cells 100 may be applied. Known configurations may also be used.

When the heat conduction portion 180 is provided in a plate shape, the heat conduction portion 180 may constitute a part of the module housing. The heat conduction portion 180 may be connected to the reinforcing portion 130. The heat conduction portion 180, the support housing 110, and the reinforcing portion 130 may be connected to form a receptacle space internally accommodating the plurality of battery cells 100.

Meanwhile, without being limited thereto, the battery module 200 of the present disclosure may further include a module housing (not shown). The module housing may include a support housing, a reinforcing portion, and a lower body and an upper body that accommodate a plurality of battery cells therein. The lower body and the upper body may be combined to form an internal accommodation space. Referring again to FIG. 1, the battery module 200 may further include a module housing covering the outer surfaces of the support housing, the reinforcing portion, the busbar assembly, and the heat conduction portion.

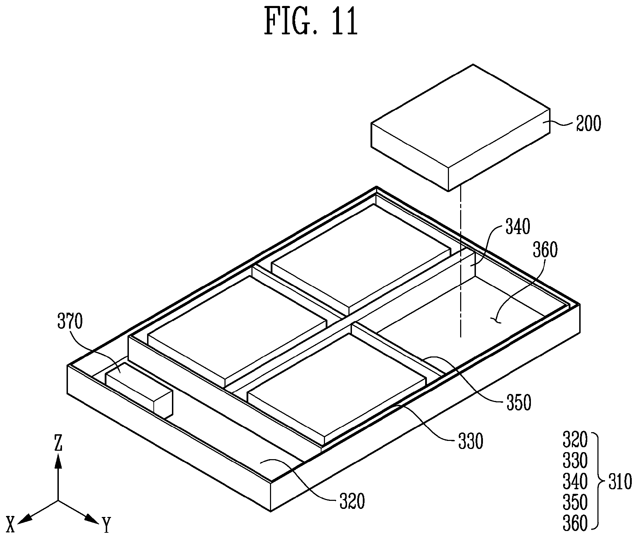

FIG. 11 illustrates a battery pack 300 according to an embodiment of the present disclosure.

The battery pack 300 of the present disclosure includes the battery module 200 of the present disclosure and a pack case 310 that accommodates the battery module 200 internally. Referring to FIG. 11, a module receiving space 360 is formed on the pack case 310, and the battery module 200 may be positioned in the module receiving space 360.

The battery pack 300 may include various configurations to ensure the structural rigidity of the pack case 310. The battery pack 300 may include a cross member 340 protruding from a tray 320 of the pack case 310 and extending across the entire tray 320 to connect opposing side wall portions 330 of the pack case 310. In addition, the battery pack 300 may be provided with a partition 350 protruding from the tray 320 of the pack case in a configuration connecting the cross member 340 and the side wall portion 330.

The pack case 310 may accommodate a plurality of battery modules 200. In this manner, a high-power and high-performance battery pack 300 may be provided.

Meanwhile, the battery pack 300 may further include a cooling plate (not shown). The cooling plate may be positioned above the battery modules 200. The cooling plate may be connected to the heat conduction portion 180 to cool the battery modules 200.

Meanwhile, the battery pack 300 may further include a pack control unit 370. The pack control unit 370 may control the plurality of battery modules 200 accommodated in the battery pack 300. For example, the pack control unit 370 may control the current, voltage, and state of charge of the battery modules 200. However, the present disclosure is not limited thereto, and the battery pack 300 may be controlled according to known methods.

The present disclosure may be embodied in various forms and modifications, and is not limited to the specific embodiments described above. The foregoing description is provided merely to illustrate the principles of the present disclosure, and various changes and modifications may be made without departing from the scope of the invention as defined by the appended claims.

## Claims

1. A battery module, comprising:
a plurality of battery cells each including a main body portion having the electrode assembly therein, a venting portion formed openable on one surface of the main body portion, and a tab portion connected to the electrode assembly and protruding outward from the main body portion in a predetermined protruding direction; and
a support housing including a contact portion in contact with at least one of the plurality of battery cells, a through hole formed through the contact portion, and a recessed portion recessed in a direction away from the plurality of battery cells on both sides of the contact portion, the support housing supporting the plurality of battery cells.

2. The battery module of claim 1, further comprising a flow path formed in the contact portion and the recessed portion, wherein the flow path communicates with the main body portion through the through hole when the venting portion is open.

3. The battery module of claim 1, wherein the plurality of battery cells are stacked in one direction such that main body portions of two adjacent battery cells among the plurality of battery cells face each other, and
wherein the venting portion and the tab portion are located on different surfaces perpendicular to a stacking direction of the plurality of battery cells among surfaces of the plurality of battery cells.

4. The battery module of claim 1, wherein the through hole is formed at a position corresponding to the venting portion.

5. The battery module of claim 1, wherein the venting portion is openable based on an internal pressure of the main body portion.

6. The battery module of claim 2, wherein the contact portion and the recessed portion extend in the predetermined protruding direction.

7. The battery module of claim 6, wherein the support housing is a corrugated plate.

8. The battery module of claim 6, wherein the recessed portion is arranged on an outermost side of the support housing in a direction in which the battery cells are stacked.

9. The battery module of claim 8, wherein the support housing comprises a plurality of contact portions and a plurality of recessed portions, and a contact portion assembly in which the plurality of contact portions are grouped into one or more predetermined numbers is alternately arranged in a stacking direction of the battery cells with a recessed portion assembly in which the plurality of recesses are grouped into one or more predetermined numbers.

10. The battery module of claim 9, wherein a cross-section of the flow path cut in a direction perpendicular to the predetermined protruding direction is polygonal.

11. The battery module of claim 1, further comprising:
reinforcing portions arranged on both sides of the plurality of battery cells in a direction in which the plurality of battery cells are stacked; and
a bending portion surrounding the plurality of battery cells and connecting the reinforcing portions to each other.

12. The battery module of claim 11, wherein the bending portion covers one surface on which the tab portion of each of the plurality of battery cells protrudes.

13. The battery module of claim 11, wherein the reinforcing portions are coupled to the bending portion at a vertex region.

14. The battery module of claim 11, wherein the reinforcing portions and the bending portion are connected by screw fastening.

15. The battery module of claim 11, wherein the support housing is connected to the reinforcing portions.

16. The battery module of claim 1, wherein the support housing comprises a stainless steel material.

17. The battery module of claim 1, further comprising a heat conduction portion covering upper surfaces of the plurality of battery cells and transferring heat to an outside.

18. A battery pack, comprising:
the battery module of claim 1; and
a pack case accommodating the battery module therein.
